# EUROPEAN PATENT SPECIFICATION

(11) **EP 4 219 354 B1**
(45) Date of publication and mention of the grant of the patent: **14.05.2025**
(21) Application number: 23153188.0
(22) Date of filing: 25.01.2023
(51) Int. Cl.: B65G 47/14

(54) **SPRAY CONTAINER PUMP SORTING MACHINE**
SORTIERMASCHINE MIT SPRÜHBEHÄLTERPUMPEN
MACHINE DE TRI DE POMPE DE RÉCIPIENT DE PULVÉRISATION

(30) Priority: 01.02.2022 IT 202200001664
(43) Date of publication of application: 02.08.2023
(73) Proprietor: Weightpack S.r.l., 46044 Goito (Mantova) (IT)
(72) Inventor: COLAPINTO, Franco, I-46044 Goito, MANTOVA (IT)
(74) Representative: Long, Giorgio

(56) References cited:
- EP-A1- 2 803 606
- EP-A1- 2 883 818
- CN-U- 210 339 435
- JP-A- S 628 914
- US-A- 3 684 129

## Description

The present invention relates to a machine for sorting spray container pumps to be fed to a machine for closing said containers.

Spray containers, or sprayers, generally used for dispensing detergents or similar liquids, comprise a graspable container and a closure consisting of a so-called pump. The pump comprises a tube which draws in the liquid and a graspable body having a dispensing hole and a trigger capable of actuating the pump to spray the liquid through the dispensing hole.

It is apparent from the above that the capping operations of such containers are more difficult than the operation of capping containers with conventional cylindrical caps, firstly due to the irregular shape of the pumps.

Indeed, a first occurring problem is to feed the pumps to the capping machine in a sorted and oriented manner, a complicated operation given the particular shape of the pumps.

There are sorting machines, or "sorters", which automatically implement this operation, but they have poor flexibility because they are difficult to adapt to the various pump formats, and they are difficult to maintain because the sorter is placed at a greater height than the surface for transporting the pumps to the capping machine, which requires the use of ladders.

JP S62 8914 A discloses a sorting machine for pumps for spray containers comprising the features mentioned in the preamble of claim 1.

Therefore, the problem addressed by the present invention is to provide a pump sorting machine, also referred to as a "sorter", which flexibly adapts to the various sizes of pumps and is easy to manufacture and maintain.

According to the invention such a problem is solved by a pump sorting machine as defined in claim 1.

Preferred embodiments are defined in claims 2 to 9.

Further features and advantages of the present invention will become more apparent from the description of some embodiments thereof, given below by way of non-limiting indication, with reference to the following figures:

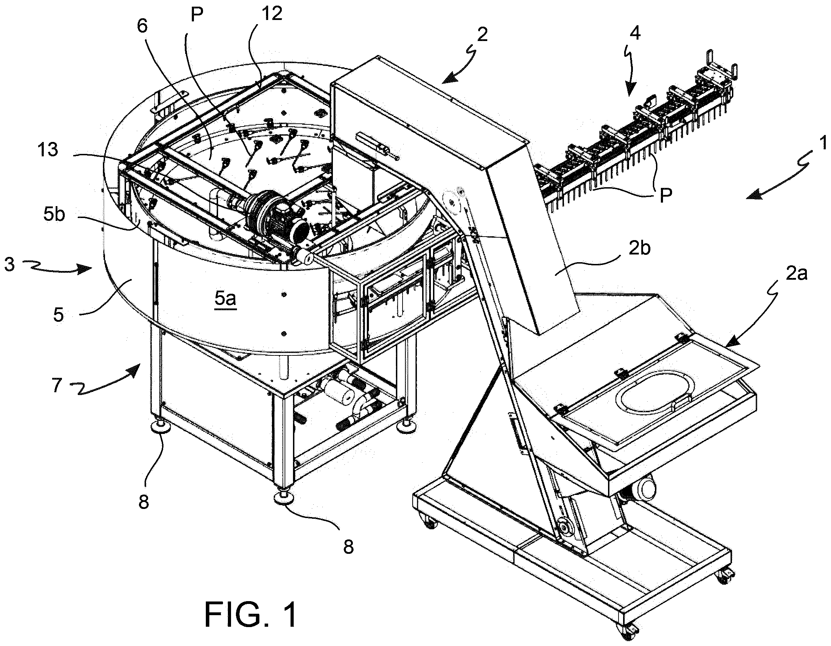

Figure 1 shows an overall perspective view of the pump sorting machine according to the invention;

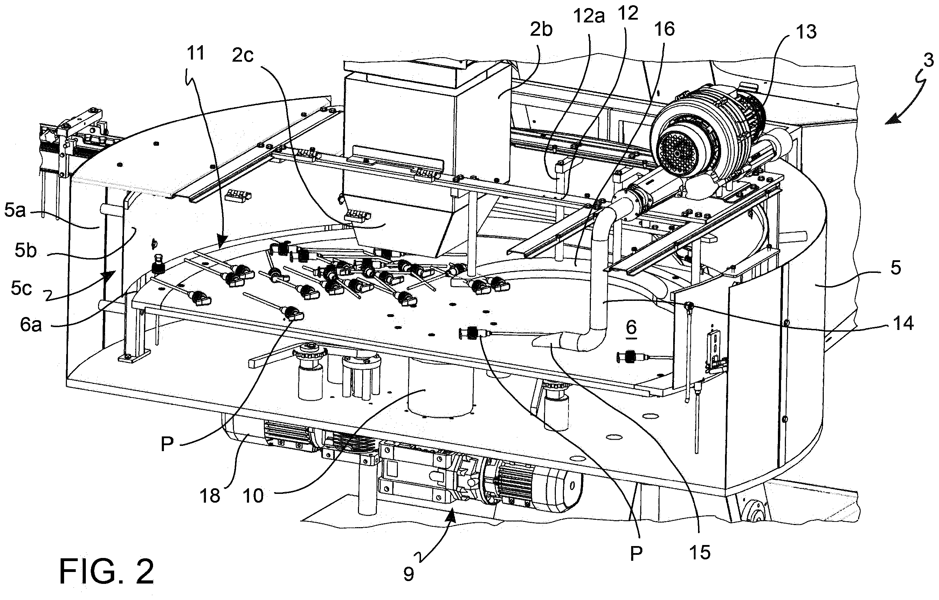

Figure 2 shows a partial cutaway perspective view of the sorting machine in Figure 1;
Figure 3 shows a cutaway perspective view of a detail in Figure 2;

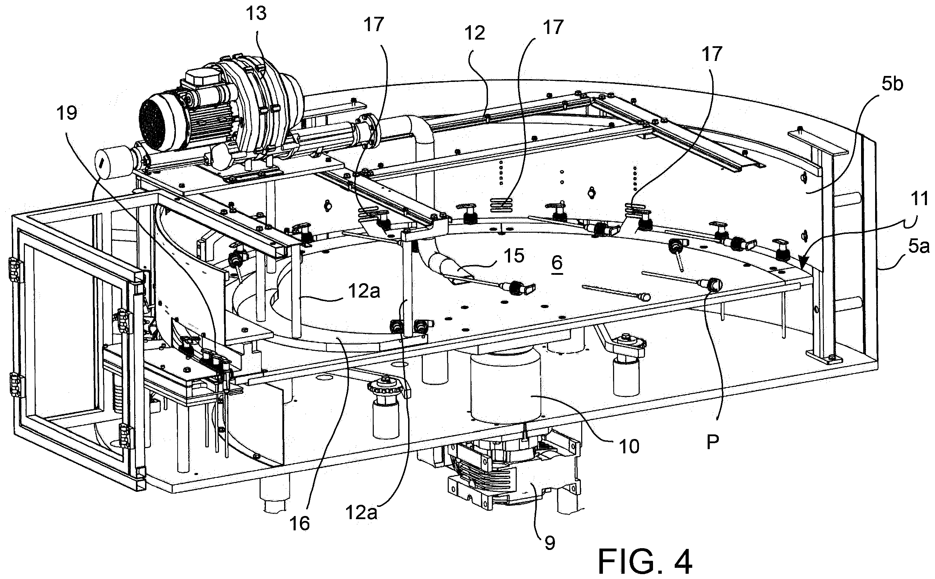

Figure 4 shows a different partial cutaway perspective view of the sorting machine in Figure 1;

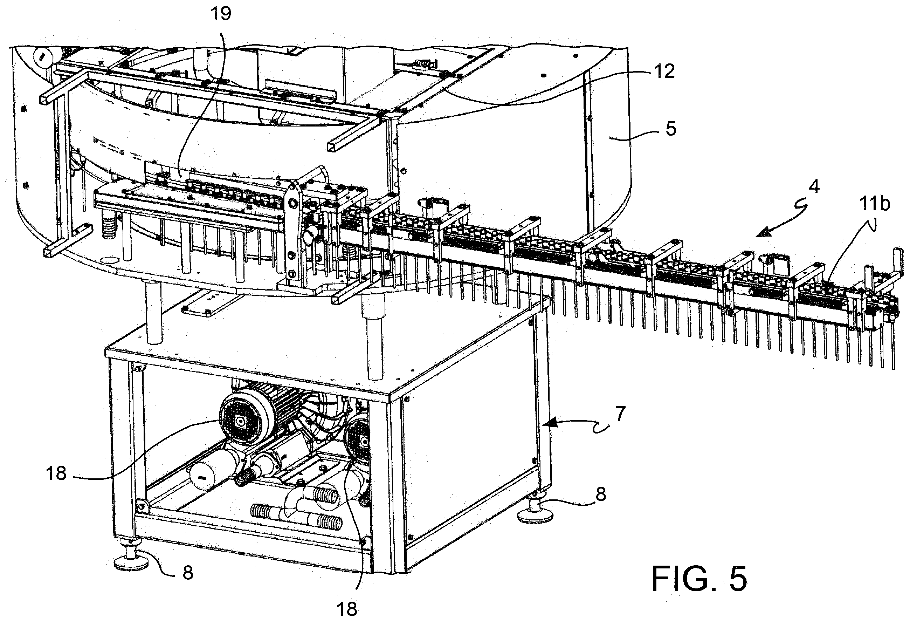

Figure 5 shows a perspective view of a different detail of the machine in Figure 1;

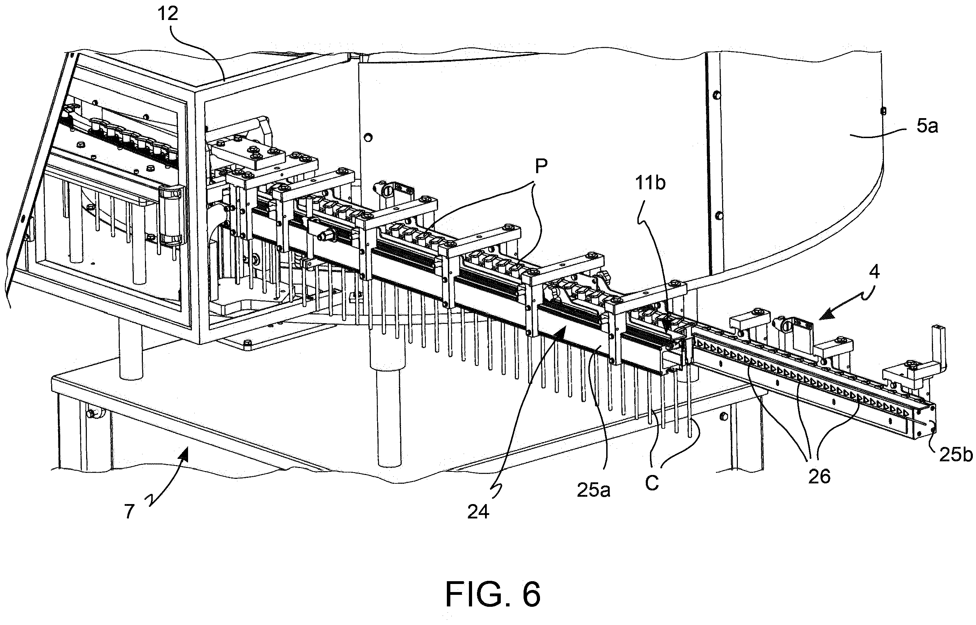

Figure 6 shows a partial cutaway perspective view of the detail in Figure 5;

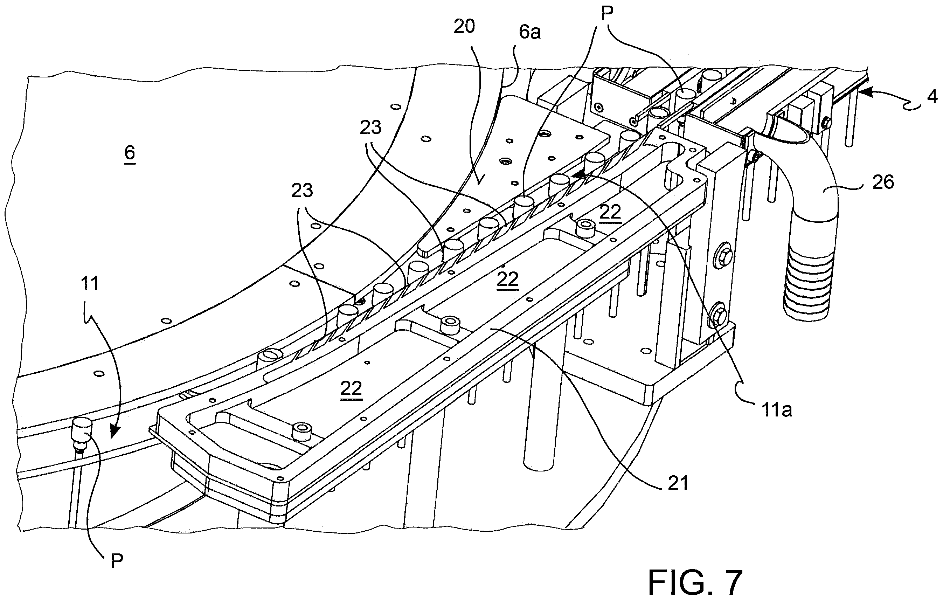

Figure 7 shows a different partial cutaway perspective view of the detail in Figure 5;

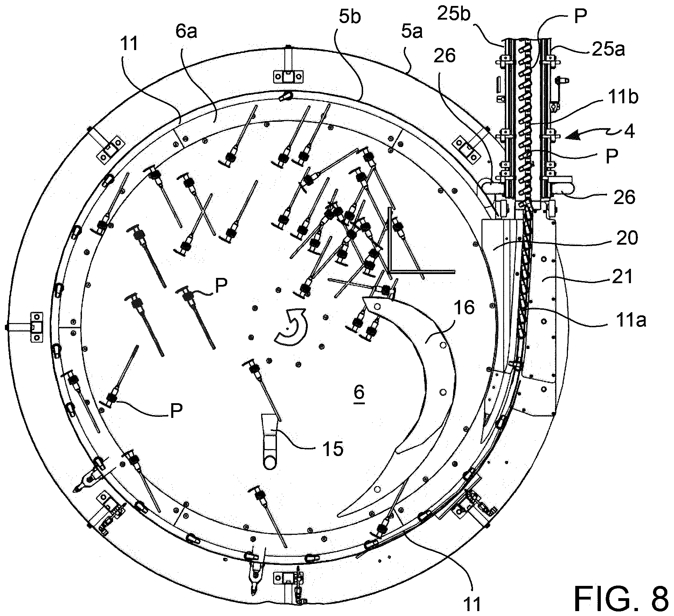

Figure 8 shows a top plan view of a detail of the machine in Figure 1;

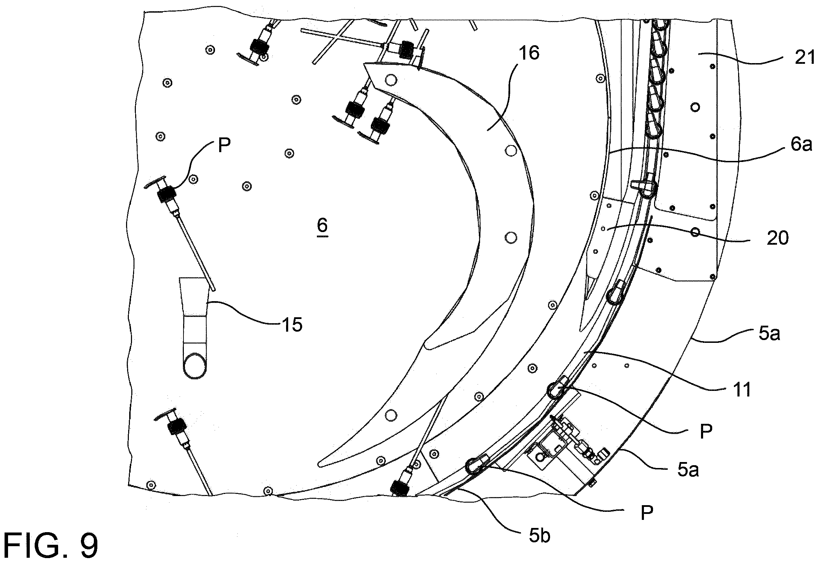

Figure 9 shows a partial top plan view of the detail in Figure 8;
Figure 10 shows a partial perspective view of the sorting machine of the invention.

With reference to the drawings, the sorting machine according to the invention, indicated as a whole by numeral 1, comprises a feeder 2 of pumps P, which feeds the pumps to a sorting member 3, which in turn supplies the sorted pumps P to a conveyor 4. The latter in turn feeds the sorted pumps to a capping machine (not shown) arranged downstream.

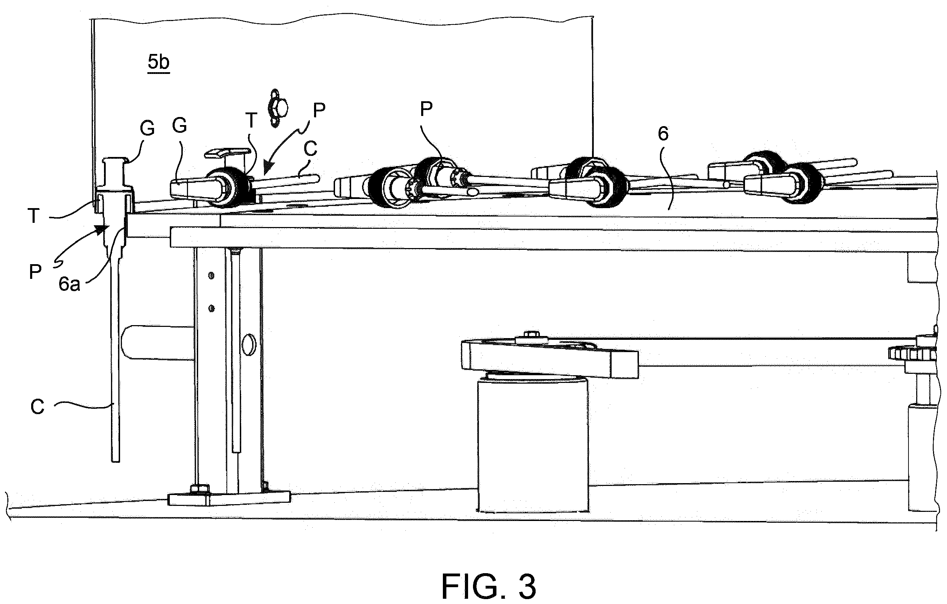

As shown in Figure 3, for example, the pumps P comprise a cap portion T operatively connected to a dosing member G and a tube C.

Feeder 2 is of the conventional type and comprises a store 2a of pumps P and a lifter member 2b which ends above the sorting member 3 with a dispensing opening 2c and which then randomly unloads the pumps P into the sorting member 3.

The sorting member 3 comprises a cylindrical casing 5 being open at the top and comprising a rotating disc 6 on the bottom. The sorting member 3 rests on a support structure 7 provided with feet 8, housing a motor drive 9 for the rotating disc 6. The motor drive 9 is connected to the rotating disc 6 by means of a shaft 10.

The rotating disc 6 is arranged on a horizontal plane and has a substantially uniform surface, i.e., it does not comprise any recesses, dips, ridges or partitions. By virtue of this feature, the rotating disc 6 can convey pumps with similar size and profiles without needing to change specifically sized components.

The cylindrical casing 5 comprises an outer structure 5a and an inner side 5b, between which a gap 5c is placed, which can house installations such as pressurized air ducts, connection cables, and the like.

An annular spacing 11 which forms a sorting seat of the pumps P is placed between the peripheral edge 6a of the rotating disc 6 and the inner side 5b of casing 5. The width of the annular spacing 11 is configured to hold the cap portion T of pump P suspended with the tube C protruding downwards with respect to the rotating disc 6.

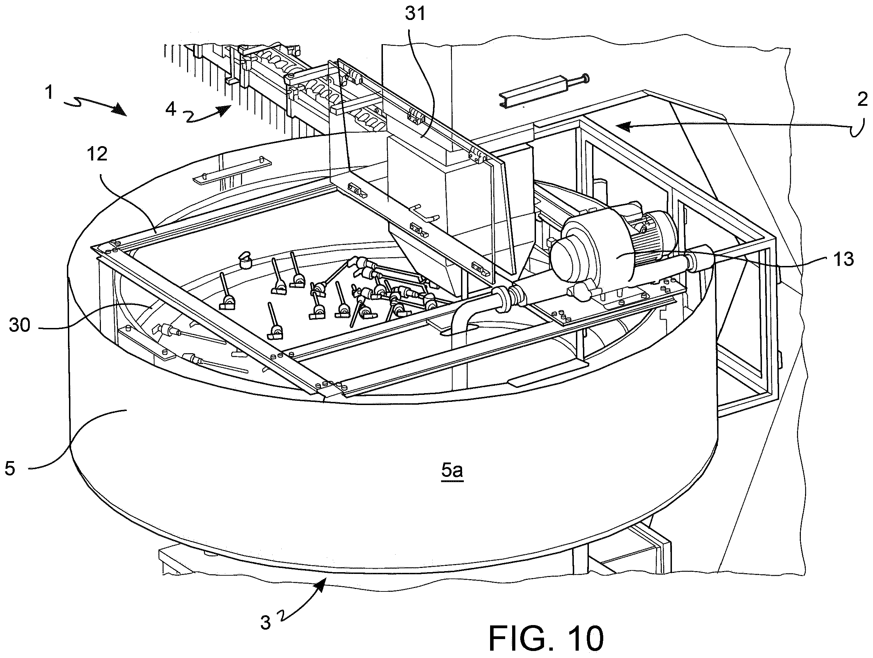

A frame 12 which supports a fan 13 is placed above the opening of casing 5. As shown in Figure 10, a protective cover 30 for closing the upper opening of casing 5 can be placed on frame 12. Preferably, the protective cover 30 is transparent and is made of polycarbonate, for example. Cover 30 can further comprise a door 31 for accessing the interior, preferably connected to a safety microswitch.

Fan 13 comprises a dispensing duct 14 which ends with a vent 15 arranged skimming the rotating disc 6. Vent 15 is positioned over a first half of the surface of the rotating disc 6 and faces the peripheral edge 6a of the opposite half.

Frame 12 also supports, by means of suitable rods 12a, a manifold profile 16 placed skimming the rotating disc 6. In the embodiment shown, the manifold profile 16 is arc-shaped (or crescent moon-shaped) and is arranged downstream of vent 15, with respect to the rotation direction of the rotating disc 6, with the concave side facing upstream. Thereby, the manifold profile 16 groups the pumps P together and, in combination with the centrifugal force thereof operated by the rotating disc 6, keeps them in a portion of the rotating disc 6 close to the peripheral edge 6a thereof and substantially facing the skimming vent 15.

The inner side 5b of casing 5 comprises a plurality of vents 17 connected to fans 18, placed in the support structure 7, by means of suitable pipes (not shown) housed in gap 5c. The vents 17 dispense jets of air which serve the function to select the pumps P inserted in a sorted manner into the annular spacing 11 from the unsorted ones, i.e., in other words, to keep the pumps P arranged in an irregular manner on the annular spacing 11 (for example, placed transversely and in any case with the tube C not inserted into the spacing) away therefrom.

The inner side 5b of casing 5 comprises an opening 19 placed downstream of the skimming vent 15, with respect to the rotation direction of the rotating disc 6, which opening communicates with conveyor 4. A deflector 20 channeling the sorted pumps P outside the annular spacing 11 and towards conveyor 4 is positioned at opening 19. A manifold member 21 is placed facing the deflector 20, which in addition to defining, together with deflector 20, a connection spacing 11a for the connection with conveyor 4, comprises chambers 22 for dispensing pressurized air from the fans 18. The dispensing chambers 22 comprise a plurality of lamellar openings 23 which open onto the connection spacing 11a and are inclined towards conveyor 4. Thereby, by striking the pumps P from the annular spacing 11 (where they were pushed by the rotation itself of the rotating disc 6), the pressurized air pushes them towards conveyor 4, thus forming means for moving the pumps P along conveyor 4.

Conveyor 4 consists of a track structure 24 consisting of a first support bar 25a and a second support bar 25b separated by a transport spacing 11b configured, in a similar manner to the annular spacing 11, to hold the cap portion T of pump P suspended with the tube C protruding downwards (as shown in the figures).

The support bars 25a, 25b are hollow and comprise, on the side facing the transport spacing 11b, a plurality of lamellar openings 26 inclined towards the movement direction of the pumps P. The pressurized air from the fans 18 flows inside the cavities of the support bars 25a, 25b, being introduced through a ventilation duct 26 so as to form, together with the pressurized air introduced at the connection spacing 11a, the movement means for the pumps P along conveyor 4.

The operation of the sorting machine 1 according to the invention is apparent from the above description.

The pumps P are randomly introduced onto the rotating disc 6 and are pushed, by the pressurized air flow dispensed by the skimming vent 15, towards the peripheral edge 6a so that the pumps P reaching it with the correct orientation can be introduced into the annular spacing 11, being held suspended by the cap portion T. Vice versa, the pumps P which have no correct orientation are pushed back onto the rotating disc 6 by the air jets emitted by the vents 17. The manifold profile 16 facilitates this operation, collecting the pumps P scattered on the rotating disc 6 in a favorable position to be pushed back towards the annular spacing 11 by the air leaving the skimming vent 15.

The pumps P which are inserted into the annular spacing 11 are moved by the rotation of the same rotating disc 6 up to reaching the connection spacing 11a, where the movement means consisting of a pressurized air flow leaving the lamellar openings 23, 26 allow the pumps P to advance along conveyor 4 towards the capping machine.

The sorting machine 1 of the invention thus allows completing the "sorting" process in a simple and efficient manner with a structure comprising few assembled parts, so that the adaptation thereof to a different size of the pumps P can be achieved by replacing or modifying a limited number of elements.

The movement by means of pressurized air is efficient and affordable and the productivity of the machine is 80% higher than the sorting machines currently on the market.

Moreover, the fact that the rotating disc 6 is on the same plane as conveyor 4 facilitates the maintenance thereof, ladders and lifting systems not being required as in the known machines.

It is apparent that only some particular embodiments of the present invention have been described, to which those skilled in the art will be able to make all changes required to adapt it to particular applications, without departing from the scope of protection of the present invention as defined in the claims.

## Claims

1. A sorting machine (1) for selecting and sorting pumps (P) for spray containers, comprising a feeder (2) of pumps (P), which feeds the pumps to a sorting member (3), which in turn supplies the sorted pumps (P) to a conveyor (4), **characterized in that** the sorting member (3) comprises a casing (5) open at the top and comprising a rotating disc (6) on the bottom having a peripheral edge (6a), wherein an annular spacing (11) which forms a sorting seat of the pumps (P) is placed between the rotating disc (6) and the inner surface of the casing (5), wherein the casing (5) is cylindrical and comprises an outer structure (5a) and an inner side (5b) between which a gap (5c) is placed and wherein the inner side (5b) of the casing (5) comprises an opening (19) placed downstream of a skimming vent (15), with respect to the rotation direction of the rotating disc (6), which opening (19) communicates with the conveyor (4), a deflector (20) being positioned at the opening (19), which deflector (20) channels the sorted pumps (P) outside the annular spacing (11) and towards the conveyor (4),
**characterized in that** the sorting machine comprises a manifold member (21) facing the deflector (20), wherein the manifold member (21) defines, together with the deflector (20), a connection spacing (11a) for the connection with the conveyor (4) and comprises chambers (22) for dispensing pressurized air, wherein the dispensing chambers (22) comprise a plurality of lamellar openings (23) which open onto the connection spacing (11a) and which are inclined towards the conveyor (4) so that the pressurized air, by striking the pumps (P), pushes them towards the conveyor (4).

2. The sorting machine (1) according to claim 1, wherein said annular spacing (11) is defined between said peripheral edge (6a) of the rotating disc (6) and said inner side (5b) of the casing (5).

3. The sorting machine (1) according to any one of claims 1 to 2, wherein the skimming vent (15) for dispensing pressurized air is placed skimming over a first half of the surface of the rotating disc (6) and faces the peripheral edge (6a) of the opposite half.

4. The sorting machine (1) according to any one of claims 1 to 3, wherein a frame (12) which supports a fan (13) is placed above the opening of the casing (5), the fan (13) comprising a dispensing duct (14) which ends with said skimming vent (15).

5. The sorting machine (1) according to any one of claims 1 to 4, comprising an arc-shaped manifold profile (16) placed skimming the rotating disc (6) and arranged downstream of the skimming vent (15), with respect to the rotation direction of the rotating disc (6), with the concave side facing upstream.

6. The sorting machine (1) according to any one of claims 1 to 5, wherein the inner side (5b) of the casing (5) comprises a plurality of vents (17) for dispensing pressurized air facing the rotating disc (6).

7. The sorting machine (1) according to any one of claims 1 to 6, wherein the conveyor (4) consists of a track structure (24) consisting of a first support bar (25a) and a second support bar (25b) separated by a transport spacing (11b) configured to hold a cap portion (T) of the pump (P) suspended with a tube (C) protruding downwards.

8. The sorting machine (1) according to claim 7, wherein the support bars (25a, 25b) are hollow and comprise, on the side facing the transport spacing (11b), a plurality of lamellar openings (26) inclined towards the movement direction of the pumps (P), wherein pressurized air flows in the cavities of the support bars (25a, 25b).

9. The sorting machine (1) according to any one of claims 1 to 8, wherein the rotating disc (6) is arranged on a horizontal plane and has a substantially uniform surface, i.e., it does not comprise any recesses, dips, ridges or partitions.

## Patentansprüche

1. Sortiermaschine (1) zum Selektieren und Sortieren von Pumpen (P) für Sprühbehälter, mit einer Zuführvorrichtung (2) für Pumpen (P), welche die Pumpen einem Sortierelement (3) zuführt, welches wiederum die sortierten Pumpen (P) einem Förderer (4) zuführt, **dadurch gekennzeichnet, dass** das Sortierelement (3) ein Gehäuse (5) umfasst, welches an der Oberseite offen ist und am Boden eine drehende Scheibe (6) mit einem Umfangsrand (6a) umfasst, wobei ein ringförmiger Zwischenraum (11), welcher einen Sortiersitz für die Pumpen (P) bildet, zwischen der drehenden Scheibe (6) und der Innenfläche des Gehäuses (5) angeordnet ist, wobei das Gehäuse (5) zylindrisch ist und eine äußere Struktur (5a) und eine Innenseite (5b) umfasst, zwischen welchen ein Spalt (5c) angeordnet ist, und wobei die Innenseite (5b) des Gehäuses (5) eine in Bezug auf die Drehrichtung der drehenden Scheibe (6) stromabwärts eines Blasluftauslasses (15) angeordnete Öffnung (19) umfasst, welche Öffnung (19) mit dem Förderer (4) verbunden ist, wobei ein Deflektor (20) an der Öffnung (19) angeordnet ist, welcher Deflektor (20) die sortierten Pumpen (P) aus dem ringförmigen Zwischenraum (11) und in Richtung des Förderers (4) leitet, **dadurch gekennzeichnet, dass** die Sortiermaschine ein dem Deflektor (20) zugewandtes Verteilerelement (21) aufweist, wobei das Verteilerelement (21) zusammen mit dem Deflektor (20) einen Verbindungszwischenraum (11a) zur Verbindung mit dem Förderer (4) bildet und Kammern (22) zum Auslassen von Druckluft umfasst, wobei die Auslasskammern (22) mehrere lamellare Öffnungen (23) umfassen, welche auf den Verbindungszwischenraum (11a) offen sind und welche in Richtung des Förderers (4) geneigt sind, so dass die Druckluft die Pumpen (P) durch Auftreffen auf diese in Richtung des Förderers (4) schiebt.

2. Sortiermaschine (1) nach Anspruch 1, bei welcher der ringförmige Zwischenraum (11) zwischen dem Umfangsrand (6a) der drehenden Scheibe (6) und der Innenseite (5b) des Gehäuses (5) gebildet ist.

3. Sortiermaschine (1) nach Anspruch 1 oder 2, bei welcher der Blasluftauslass (15) für den Auslass von Druckluft eine erste Hälfte der Fläche der drehenden Scheibe (6) überstreichend angeordnet ist und dem Umfangsrand (6a) der gegenüberliegenden Hälfte zugewandt ist.

4. Sortiermaschine (1) nach einem der Ansprüche 1 bis 3, bei welchem ein Rahmen (12), welcher ein Gebläse (13) stützt, über der Öffnung des Gehäuses (5) angeordnet ist, wobei das Gebläse (13) einen Auslasskanal (14) umfasst, welcher in dem Blasluftauslass (15) endet.

5. Sortiermaschine (1) nach einem der Ansprüche 1 bis 4, mit einem bogenförmigen Verteilerprofil (16), das die drehende Scheibe (6) überstreichend angeordnet ist und in Bezug auf die Drehrichtung der drehenden Scheibe (6) stromabwärts des Blasluftauslasses (15) angeordnet ist, wobei die konkave Seite stromaufwärts gewandt ist.

6. Sortiermaschine (1) nach einem der Ansprüche 1 bis 5, bei welcher die Innenseite (5b) des Gehäuses (5) mehrere, der drehenden Scheibe (6) zugewandte Lüftungsöffnungen (17) zum Auslassen von Druckluft umfasst.

7. Sortiermaschine (1) nach einem der Ansprüche 1 bis 6, bei welcher der Förderer (4) aus einer Bahnstruktur (24) besteht, welche durch eine erste Stützschiene (25a) und eine zweite Stützschiene (25b) gebildet ist, welche durch einen Transportzwischenraum (11b) voneinander getrennt sind, welcher dazu ausgebildet ist, einen Kappenteil (T) der Pumpe (P) hängend mit einem nach unten abstehenden Schlauch (C) zu halten.

8. Sortiermaschine (1) nach Anspruch 7, bei welcher die Stützschienen (25a, 25b) hohl sind und auf der dem Transportzwischenraum (11b) zugewandten Seite mehrere lamellare Öffnungen (26) umfassen, die zu der Bewegungsrichtung der Pumpen (P) geneigt sind, wobei Druckluft in den Hohlräumen der Stützschienen (25a, 25b) strömt.

9. Sortiermaschine (1) nach einem der Ansprüche 1 bis 8, bei welcher die drehende Scheibe (6) in einer horizontalen Ebene angeordnet ist und eine im Wesentlichen gleichmäßige Oberfläche aufweist, d.h., sie umfasst keine Ausnehmungen, Vertiefungen, Grate oder Teilungen.

## Revendications

1. Machine de tri (1) pour sélectionner et trier des pompes (P) pour récipients de pulvérisation, comprenant un chargeur (2) de pompes (P) qui charge les pompes dans un élément de tri (3) qui, de sa part, achemine les pompes (P) triés à un convoyeur (4),
**caractérisée en ce que** l'élément de tri (3) comprend un boîtier (5) ouvert en haut et comportant au fond un disque rotatif (6) ayant un bord périphérique (6a), dans laquelle un espacement (11) annulaire qui constitue un emplacement de tri des pompes (P) est disposé entre le disque rotatif (6) et la surface intérieure du boîtier (5), dans laquelle le boîtier (5) est cylindrique et comprend une structure extérieure (5a) et un côté intérieur (5b) entre lesquels un espace (5c) est placé et dans laquelle le côté intérieur (5b) du boîtier (5) comprend une ouverture (19) placée en aval d'une buse de balayage (15) par rapport à la direction de rotation du disque rotatif (6), laquelle ouverture (19) communique avec le convoyeur (4), un déflecteur (20) étant positionné à l'ouverture (19), lequel déflecteur (20) canalise les pompes (P) triées en dehors de l'espacement (11) et vers le convoyeur (4),
**caractérisée en ce que** la machine de tri comprend un élément collecteur (21) en regard du déflecteur, dans laquelle l'élément collecteur (21) définit ensemble avec le déflecteur (20) un espace de connexion (11a) pour la liaison au convoyeur (4) et comprend des chambres (22) pour débiter de l'air pressurisé, dans laquelle les chambres de débit (22) comprennent une pluralité d'ouvertures lamellaires (23) qui s'ouvrent vers l'espace de connexion (11a) et qui sont inclinées vers le convoyeur (4) de façon que l'air pressurisé, en frappant les pompes (P), les pousse vers le convoyeur (4).

2. Machine de tri (1) selon la revendication 1, dans laquelle l'espacement annulaire (11) est défini entre ledit bord périphérique (6a) du disque rotatif (6) et le côté intérieur (5b) du boîtier (5).

3. Machine de tri (1) selon l'une des revendications 1 à 2, dans laquelle la buse de balayage (15) pour diffuser de l'air pressurisé est placé en balayage au-dessus d'une première moitié de la surface du disque rotatif (6) et est en regard du bord périphérique (6a) de la moitié opposée.

4. Machine de tri (1) selon l'une des revendications 1 à 3, dans laquelle un cadre (12) qui porte un ventilateur (13) est placé au-dessus de l'ouverture du boîtier (5), le ventilateur (13) comprenant un conduit de débit (14) qui se termine par ladite buse de balayage (15).

5. Machine de tri (1) selon l'une des revendications 1 à 4, comprenant un profil de collecteur (16) en arc placé à balayer le disque rotatif (6) et agencé en aval de la buse de balayage (15), par rapport à la direction de rotation du disque rotatif (6), avec le côté creux orienté vers l'amont.

6. Machine de tri (1) selon l'une des revendications 1 à 5, dans laquelle le côté intérieur (5b) du boîtier (5) comprend une pluralité de buses (17) pour diffuser de l'air pressurisé, en regard du disque rotatif (6).

7. Machine de tri (1) selon l'une des revendications 1 à 6, dans laquelle le convoyeur (4) est constitué d'une structure de piste (24) constituée d'une première barre de support (25a) et une deuxième barre de support (25b) séparée par un espacement de transport (11b) configuré pour tenir une partie de tête (T) de la pompe (P) suspendue avec un tuyau (C) s'étendant vers le bas.

8. Machine de tri (1) selon la revendication 7, dans laquelle les barres de support (25a, 25b) sont creuses et comprennent sur le côté en regard de l'espacement de transport (11b) une pluralité d'ouvertures en lamelles (26) inclinées vers la direction de mouvement des pompes (P), dans laquelle de l'air pressurisé coule dans les cavités des barres de support (25a, 25b).

9. Machine de tri (1) selon l'une des revendications 1 à 8, dans laquelle le disque rotatif (6) est agencé dans un plan horizontal et a une surface sensiblement uniforme, c'est-à-dire il ne comprend pas de renfoncements, de creux, de crêtes, de cloisons.
